# EUROPÄISCHE PATENTSCHRIFT

(11) **EP 0 424 867 B1**
(45) Veröffentlichungstag und Bekanntmachung des Hinweises auf die Patenterteilung: **20.07.1994**
(21) Anmeldenummer: 90120281.2
(22) Anmeldetag: 23.10.1990
(51) Int. Cl.: H02K 9/14

(54) **Kühlvorrichtung für Elektromotoren**
Electric motor cooling device
Dispositif de refroidissement pour moteurs électriques

(30) Priorität: 24.10.1989 DE 8912578 U
(43) Veröffentlichungstag der Anmeldung: 02.05.1991
(73) Patentinhaber: D.I.E.N.E.S. APPARATEBAU GMBH, D-63165 Mühlheim (DE)
(72) Erfinder: Gehrmann, Wolfgang, D-6450 Hanau 6 (DE)
(74) Vertreter: Rentzsch, Heinz, Dipl.-Ing.

(56) Entgegenhaltungen:
- EP-A- 0 288 429
- AT-B- 294 967
- CH-A- 137 566
- DE-C- 645 329
- DE-C- 926 676
- US-A- 1 601 531
- US-A- 4 353 002
- PATENT ABSTRACTS OF JAPAN vol. 04, no. 59 (E-9)(541) 02 Mai 1980 & JP-A-55 029263

## Beschreibung

Bei einer aus EP-A 0235 505 bekannten Kühlvorrichtung für Elektromotoren ist der zylindrische Teil des Motorgehäuses an seinem Umfang mit achsparallelen Kühlrippen versehen, die außen von einem Abdeckblech umgeben sind. Zwischen den Kühlrippen entstehen somit mehrere achsparallele, über den Umfang des Motorgehäuses verteilt angeordnete Kühlkanäle, in welche ein Gebläse Kühlluft für das Motorgehäuse und die Wellenlager fördert. Um einen guten Wärmeübergang zwischen Kühlrippen und Abdeckblech zu gewährleisten und durch Vibrationen des Abdeckblechs verursachte zusätzliche Geräusche zu vermeiden, ist es dabei erforderlich, die Außenflächen der Kühlrippen spanabhebend zu bearbeiten, damit das Abdeckblech gut aufliegt.

AT-B 294 967 zeigt eine Kühlanordnung mit mehreren Strömungswegen für elektrische Maschinen, bei welcher sowohl im Maschinengehäuse als auch in den Lagerschilden Ansaugöffnungen für das Kühlmittel vorgesehen sind. Der Ständerkühlmittelstrom verläuft von der Gehäusemitte aus entlang des Ständerrückens gegen die Lagerschilde. Der Rotor weist axiale Strömungskanäle und beidseitig einen Lüfter auf. Jeder axiale Rotorkanal steht einerseits über einen Durchgang in der Lüfternabe mit den in den Lagerschilden vorgesehenen Eintrittsöffnungen und andererseits über den Lüfterschaufelkranz mit den Austrittsöffnungen des Maschinengehäuses in Verbindung.

In US-A 4 353 002 ist ein aus einem Elektromotor und einer Heizgalette bestehendes Aggregat beschrieben, dessen durchgehende Welle auf dem galettenfernen Ende ein erstes Lüfterrad zur Kühlung des galettenfernen Motorlagerschilds sowie zwischen Motor und Galette ein zweites Lüfterrad zur Kühlung des galettennahen Lagerschilds trägt.

Die Erfindung geht im Anspruch 1 von einer aus EP-A 0288429 bekannten Kühlvorrichtung aus. Die dort auf ein glattes zylindrisches Motorgehäuse aufgesetzte Mantelschale ist zwar auf ihrer Außenseite mit achsparallelen Kühlrippen versehen, die wesentliche Kühlung erfolgt aber durch die von einem Gebläse zwischen Motorgehäuse und Mantelschale hindurchgedrückte Kühlluft. Die Mantelschale stützt sich über einige wenige dünnwandige Stützfüße an der Außenfläche des Motorgehäuses ab, so daß diese Stützfüße den Ringraum zwischen Motorgehäuse und Mantelschale in mehrere Kühlkanäle unterteilen. Bei einer Ausführungsform dieser bekannten Kühlvorrichtung sind zusätzlich am Außenumfang des ansonsten glatten Motorgehäuses Kühlrippen angebracht, welche in die Kühlkanäle hineinragen. Die Mantelschale kann aus mehreren Teilschalen zusammengesetzt sein, die als stranggepreßte Profile ausgebildet sind.

Die Erfindung ist im Anspruch 1 gekennzeichnet. Mit ihr gelingt es, den Aufbau einer solchen Kühlvorrichtung zu vereinfachen und ihre Herstellung zu erleichtern und dabei gleichzeitig ihre Wirksamkeit noch zu verbessern, weil die Wärmeableitung über die Stege einen zusätzlichen hochwirksamen Wärmeabfluß schafft. Am Motor selbst bzw. an seinem Gehäuse sind keine Änderungen oder zusätzlichen Bearbeitungen erforderlich. Während Motorgehäuse mit angeformten Kühlrippen üblicherweise aus Grauguß bestehen, empfiehlt sich für die Herstellung der erfindungsgemäßen Profilmantelsegmente die Verwendung von Aluminium, was leicht zu bearbeiten ist und besonders gute Wärmeleiteigenschaften hat. Ein in Segmente unterteilter Profilmantel kann im Stranggußverfahren kostengünstig hergestellt werden und läßt sich einfach montieren und gegebenenfalls demontieren.

Vorteilhafte Ausgestaltungen der Erfindung ergeben sich aus den Unteransprüchen. Dabei ist aus DE-A 27 37 292 ein Elektromotor zum Amtrieb einer Heizgalette bekannt, bei dem auf dem zwischen Motor und Galette befindlichen Teil der Motorwelle ein Gebläserad sitzt. Es saugt an der Stirnseite des Motorgehäuses Kühlluft radial nach innen, leitet sie ein Stück entlang der Welle und drückt die Luft dann wieder radial nach außen. Außerdem ist am galettenfernen Ende der Motorwelle auf diese ein zweites Gebläserad aufgesetzt, welches zusammen mit einer am benachbarten Ende des Motorgehäuses befestigten Strömungsleitkappe Kühlluft achsparallel zwischen die Kühlrippen des Motorgehäuses bläst.

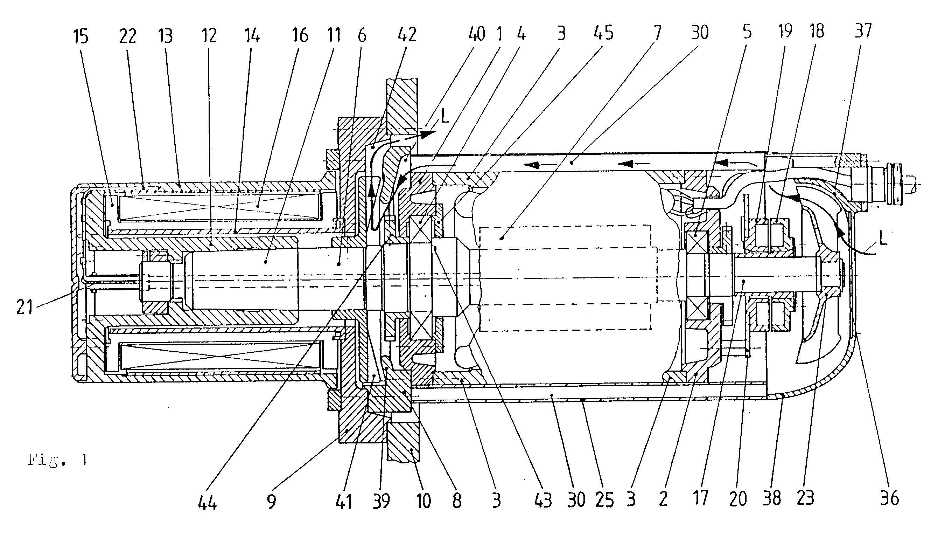

Die Erfindung wird nachfolgend anhand eines in den Zeichnungen wiedergegebenen Ausführungsbeispiels erläutert. Dabei zeigt
- Fig.1: einen Elektromotor mit von ihm angetriebener Heizgalette und der Kühlvorrichtung in einem achsparallelen Teilschnitt und
- Fig.2: einen Teilschnitt senkrecht zur Motorachse durch eines der Profilmantelsegmente.

In den beiden Stirnwänden 1 und 2 des Motorgestells 3 sitzen die beiden Wellenlager 4 und 5. Die Motorwelle 6 trägt zwischen den Stirnwänden 1 und 2 den Rotor 7 und ragt beidseitig über die Stirnwände hinaus. An der linken Stirnwand 1 ist über einen Zwischenflansch 8 ein Tragflansch 9 befestigt, der vom Rahmen 10 einer Maschine, z.B. einer Garnbehandlungsmaschine, getragen wird. Das aus der linken Stirnwand 1 herausragende Ende 11 der Motorwelle 6 ist über eine Nabe 12 mit dem Mantel 13 einer durch einen Induktor 14 beheizten Galette verbunden. Der ortsfeste Induktor 14, bestehend aus Kern 15 und Erregerwicklung 16, wird in bekannter Weise vom Maschinenrahmen 10 gehalten. Auf dem aus der rechten Stirnwand 2 herausragenden Ende 17 der Motorwelle 6 ist der rotierende Teil 18 eines als Meßwertübertrager dienenden bekannten Drehtransformators befestigt, dessen stationärer Teil 19 mittels einer Halteplatte 20 von der rechten Stirnwand 2 getragen wird. Die Wicklung des rotierenden Teils 18 ist über eine durch die hohle Motorwelle 6 geführte Leitung 21 an einen im Galettenmantel 13 angeordneten Temperaturfühler 22 und die Wicklung des feststehenden Teils 19 an einen die Stromzufuhr zur Induktorwicklung 16 steuernden Regler angeschlossen. Ferner sitzt auf dem rechten Wellenende 17 ein Gebläserad 23. Die beiden Stirnwände 1 und 2 bilden zusammen mit dem dazwischenliegenden Mantelteil 3 ein rohrförmiges zylindrisches Gehäuse.

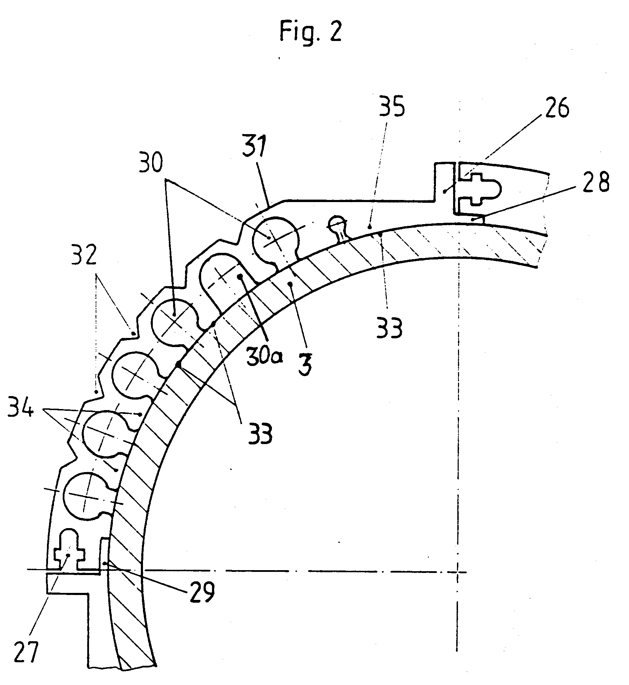

Dieses Gehäuse ist von einem Profilmantel 25 umgeben, dessen Querschnitt aus Fig.2 ersichtlich ist. Es ist nur einer von vier Quadranten des Profilmantels dargestellt. Er könnte auch einstückig ausgebildet sein. Der Zusammenbau aus mehreren Segmenten ist jedoch einfacher, insbesondere aber ist die Herstellung solcher als Segment, z.B. als Quadrant oder Drittelkreis ausgestalteter Profile einfacher als ein in sich geschlossener Mantel, der auf das glatte zylindrische Motorgehäuse 3 aufgeschrumpft werden könnte. Die einzelnen Segmente werden im gezeigten Beispiel miteinender verschraubt, nämlich mittels Schrauben, welche durch die Flanschstücke 26 hindurchragen und in vom Gegenstück 27 gehaltene Muttern oder Gewindeleisten eingeschraubt sind. Dabei sorgen eine Ansatzleiste 28 und eine entsprechende Ausnehmung 29 für einen gut wärmeleitenden Übergang zwischen den einzelnen Segmenten. Während sich das in Fig.2 gezeigte Profilmantelsegment über 90° des Umfangs erstreckt, könnten die einzelnen Segmente auch andere, gegebenenfalls unterschiedliche Winkelbereiche abdecken, z.B. 120°. Der Profilmantel 25 bildet sich parallel zur Motorachse erstreckende Kühlkanäle 30 von im wesentlichen kreisförmigem Querschnitt. Diese können vollständig innerhalb des Profilmantels gebildet oder, wie in Fig.2 gezeigt, zum Gehäusemantel 3 hin offen sein. Der Querschnitt kann auch von der Kreisform abweichen, beispielsweise wie der Kanal 30a U-förmig sein. Die äußere Mantelwand 31 ist mit Einbuchtungen 32 versehen, um einerseits die abstrahlende Oberfläche zu vergrößern und andererseits eine möglichst gleiche Wandstärke zu haben und hierdurch Wärmespannungen zu vermeiden. Die am Motorgehäuse 3 anliegenden Innenflächen 33 der zwischen den einzelnen Kühlkanälen befindlichen Stege 34 des Profilmantels 25 und der Endstücke 35 sind dem Außendurchmesser des rohrförmigen Motorgehäuses 3 entsprechend gewölbt, damit sie großflächig auf dem Motorgehäuse aufliegen und ein guter Wärmeübergang gewährleistet ist. Der Profilmantel 25 besteht vorzugsweise aus Aluminium, er kann als Strangprofil gezogen werden. Solche Profile lassen sich im Stranggußverfahren mit hoher Maßhaltigkeit herstellen, so daß keine Nachbearbeitung erforderlich ist. Ein glattes zylindrisches Motorgehäuse ist ebenfalls leicht herstellbar.

Eine mit einem Lufteinlaßgitter 36 versehene Haube 37 deckt die Stirnwand 2 und das Gebläserad 23 ab, und ihr äußerer Rand 38 fluchtet mit der Außenwand 31 des Profilmantels 25. Das von der Motorwelle 6 angetriebene Gebläserad 23 saugt durch das Gitter 36 hindurch Kühlluft L an und drückt sie in die Kühlkanäle 30. Hierdurch wird nicht nur der Mantel des Motorgehäuses gekühlt, sondern der im Raum zwischen Haube 37 und Stirnwand 2 entstehende Luftstrom L kühlt zugleich das Lager 5.

Die am linken Ende der Kühlkanäle austretende Luft wird durch einen Leitring 39 radial nach innen zur Welle 6 hin abgelenkt und kühlt dabei den dem Lager 4 benachbarten Teil der Welle 6. Der stationäre Leitring 39 bildet Einlaßöffnungen 40 eines Radialgebläses, dessen Gebläserad 41 auf dem der Galette benachbarten Teil der Welle 6 großflächig und gut wärmeleitend befestigt ist. Es drückt die zunächst aus den Einlaßöffnungen 40 auf die Welle 6 zuströmende Kühlluft L radial nach außen, wo die Kühlluft L über die Auslässe 42 die Kühlvorrichtung verläßt. Durch die großflächige Anlage des Gebläserads 41 an der Welle 6 wird dieser der induktiv beheizten Galette benachbarte Teil der Welle 6 zusätzlich gekühlt und der Wärmeübergang von der Galette und vom Induktor 14 auf das galettennahe Lager 4 vermindert. Dies verringert die Lagertemperatur erheblich und erhöht die Lebensdauer des Lagers. Im gezeigten Beispiel ist der Leitring 39 Teil des Zwischenflansches 8. Der Innenring des Lagers 4 stützt sich einerseits an einem Wellenabsatz 43 ab und wird andererseits durch einen Klemmring 44 gehalten. Der Außenring ist mittels einer Druckplatte 45 in der Stirnwand 1 gehalten. Das gekühlte Gebläserad 41 schirmt das Lager 4 gegen die Wärmestrahlung der Galette 13 ab.

## Patentansprüche

1. Kühlvorrichtung für Elektromotoren, insbesondere Antriebsmotoren von Heizgaletten, mit
a) einem als glattes zylindrisches Rohr (3) ausgebildeten Motorgehäuse (1,2,3);
b) einem auf das Motorgehäuse (3) aufgesetzten und dieses umgebenden schalenförmigen Profilmantel (25) aus gut wärmeleitendem Werkstoff;
c) mehreren in Achsrichtung verlaufenden und über den Gehäuseumfang verteilt angeordneten Kühlkanälen (30) im Profilmantel (25); sowie
d) einem am abtriebsfernen Ende des Motorgehäuses Kühlluft (L) in die Kühlkanäle fördernden Gebläse (23), dessen Rotor mit der Motorwelle (6) verbunden ist;
**dadurch gekennzeichnet,** daß
e) eine Vielzahl von Kühlkanälen (30,30a) gleichmäßig über den Gehäuseumfang (3) verteilt angeordnet ist und die einzelnen Kühlkanäle durch eine entsprechende Vielzahl der Wärmeableitung von der Äußeren Mantelfläche (33) des Motorgehäuses zum Profilmantel dienender achsparalleler Stege (34) des Profilmantels (25) voneinander getrennt sind; und
f) die am Motorgehäuse (3) anliegenden Endflächen (33) dieser Wärmeableitstege (34) dem Durchmesser des Motorgehäuses entsprechend gewölbt sind und die Stege mit ihrer gesamten Endfläche am Motorgehäuse (3) anliegen.

2. Kühlvorrichtung nach Anspruch 1, dadurch gekennzeichnet, daß die Kühlkanäle (30,30a) im Profilmantel (25) zur Oberfläche des Motorgehäuses (1,2,3) hin offen sind.

3. Kühlvorrichtung nach Anspruch 1 oder 2, dadurch gekennzeichnet, daß der Profilmantel (25) aus mehreren jeweils einen Teilwinkelbereich des Motorgehäuseumfangs bedeckenden Segmenten besteht.

4. Kühlvorrichtung nach Anspruch 1,2 oder 3, dadurch gekennzeichnet, daß die Kühlkanäle (30) annähernd kreisförmigen Querschnitt haben.

5. Kühlvorrichtung nach einem der Ansprüche 1 bis 4, dadurch gekennzeichnet, daß der Profilmantel (25) aus Aluminium besteht.

6. Kühlvorrichtung nach einem der Ansprüche 1 bis 5, dadurch gekennzeichnet, daß am abtriebsnahen Ende des Motorgehäuses (3) den Austrittsenden der Kühlkanäle (30,30a) gegenüberstehend die Einlaßöffnungen (40) eines Radialgebläses (39,41) angeordnet sind, dessen Gebläserad (41) großflächig auf der Motorwelle (6) befestigt ist

7. Kühlvorrichtung nach Anspruch 6, dadurch gekennzeichnet, daß Luftführungskanäle im Radialgebläse von den Einlaßöffnungen (40) zunächst in Richtung zur Motorwelle (6) hin ausgerichtet und anschließend U-förmig radial nach außen abgebogen sind und in Austrittsöffnungen (42) münden.

8. Kühlvorrichtung nach Anspruch 7, dadurch gekennzeichnet, daß die dem Motor (3,7) abgewandte Begrenzungswand der nach außen führenden Teile (42) der Luftführungskanäle durch den Tragflansch (9) eines vom Motor angetriebenen rotierenden Bauteils, z.B. einer induktiv beheizten Galette (13,14) gebildet ist.

9. Kühlvorrichtung nach Anspruch 8, dadurch gekennzeichnet, daß die den Luftstrom (L) radial nach außen leitenden Teile der Luftführungskanäle zwischen Tragflansch (9) und Gebläserad (41) einerseits sowie einem stationären Leitring (39) andererseits gebildet sind, der zusammen mit der abtriebsseitigen Stirnwand (1) des Motorgehäuses (3) die den Luftstrom (L) nach innen leitenden Teile der Luftführungskanäle bildet.

## Claims

1. A cooling device for electrical motors, in particular drive motors of heated rolls, comprising
a) a motor housing (1,2,3) shaped as an even cylindrical tube (3);
b) a profile shell (25) made of a well heat conducting material and fixed onto said motor housing and surrounding it;
c) several cooling channels (30) within said profile shell (25) extending in axial direction and being distributed around the circumference of the housing; and
d) a blower (23) supplying cooling air (L) into the cooling channels at the end of the motor housing which is remote from the driven load, whereat the rotor of the blower is connected to the motor shaft (6);
**characterized in that**
e) a plurality of cooling channels (30,30a) is provided and is uniformly distributed around the circumference of the housing (3), and the individual cooling channels are separated from each other by a corresponding plurality web ribs (34) extending in axial direction of the profile shell (25) and serving for the removal of heat from the outer surface (33) of the motor housing to the profile shell; and
f) the end surfaces (33) of those heat conducting web ribs (34) engaging the motor housing (3) are curved in accordance with the diameter of the motor housing and engage the motor housing (3) across their entire end surface.

2. The cooling device of claim 1, characterized in that the cooling channels (30,30a) within the profile shell (25) are open in the direction to the surface of the motor housing (1,2,3).

3. The cooling device of claim 1 or 2, characterized in that the profile shell (25) consists of several segments, each of them covering a partial area of the circumference of the motor housing.

4. The cooling device of claim 1, 2, or 3, characterized in that the cooling channels (30) are of almost circular cross-shape.

5. The cooling device according to one of the claims 1 to 4, characterized in that the profile shell (25) consists of aluminum.

6. The cooling decice according to one of the claims 1 to 5, characterized in that at the end of the motor housing (3) adjacent the driven load the inlet openings (40) of a radial blower (39,41) are provided opposite the outlet ends of the cooling channels (30,30a), and the blower wheel (41) is fixed to the motor shaft (6) across a large surface area.

7. The cooling device of claim 6, characterized in that air guiding passages within the radial blower extend from the inlet openings (40) in the direction onto the motor shaft (6) and thereafter are U-shaped and bent radially outwards and port into outlet openings (42).

8. The cooling device of claim 7, characterized in that the end wall remote from the motor (3,7) of those portions (42) of the air guiding channels leading to the outside is constituted by the supporting flange (9) of a rotating part driven by the motor, e.g. a part of an inductively heated galette (13,14).

9. The cooling device of claim 8, characterized in that those portions of the air guiding channels guiding the air stream (L) radially outwards are formed between the supporting flange (9) and the blower wheel (41) on the one hand and a stationary guiding ring (39) on the other hand, which guiding ring together with the front wall (1) of the motor housing (3) remote from the driven load constitutes those portions of the air guiding channels which guide the air stream (L) inwards.

## Revendications

1. Dispositif de refroidissement pour moteurs électriques, notamment des moteurs d'entraînement de galettes de chauffage, comprenant
a) un carter de moteur (1, 2, 3) réalisé sous forme de tube cylindrique lisse (3);
b) une enveloppe profilée (25) en forme de coque, rapportée sur le carter de moteur (3) en entourant celui-ci, et réalisée en un matériau conduisant bien la chaleur;
c) plusieurs canaux de refroidissement (30) agencés dans l'enveloppe profilée (25), qui s'étendent dans la direction axiale et sont disposés de manière répartie sur la périphérie du carter; ainsi que
d) un ventilateur (23) dont le rotor est relié à l'arbre moteur (6), et refoulant de l'air de refroidissement (L) dans les canaux de refroidissement, à l'extrémité du carter de moteur opposée à l'extrémité de sortie d'entraînement;
caractérisé
e) en ce qu'un grand nombre de canaux de refroidissement (30, 30a) sont disposés de manière régulièrement répartie sur la périphérie du carter (3), les canaux de refroidissement individuels étant séparés les uns des autres par un grand nombre correspondant de nervures (34) de l'enveloppe profilée (25), parallèles à l'axe et destinées à l'évacuation de la chaleur de la surface d'enveloppe extérieure (33) du carter de moteur vers l'enveloppe profilée; et
f) en ce que les surfaces terminales (33) de ces nervures d'évacuation de chaleur (34), appliquées contre le carter de moteur (3), présentent une courbure correspondant au diamètre du carter de moteur, les nervures étant en appui, par la totalité de leur surface terminale, sur le carter de moteur (3).

2. Dispositif de refroidissement selon la revendication 1, caractérisé en ce que les canaux de refroidissement (30, 30a) dans l'enveloppe profilée (25), sont ouverts en direction de la surface du carter de moteur (1, 2, 3).

3. Dispositif de refroidissement selon la revendication 1 ou 2, caractérisé en ce que l'enveloppe profilée (25) est constituée de plusieurs segments recouvrant chacun une zone angulaire partielle de la périphérie du carter de moteur.

4. Dispositif de refroidissement selon les revendications 1, 2 ou 3, caractérisé en ce que les canaux de refroidissement (30) présentent une section transversale approximativement de forme circulaire.

5. Dispositif de refroidissement selon l'une des revendications 1 à 4, caractérisé en ce que l'enveloppe profilée (25) est réalisée en aluminium.

6. Dispositif de refroidissement selon l'une des revendications 1 à 5, caractérisé en ce qu'à l'extrémité proche de la sortie d'entraînement du carter de moteur (3), sont disposées, en face des extrémités de sortie des canaux de refroidissement (30, 30a), les ouvertures d'entrée (40) d'un ventilateur radial (39, 41), dont la roue de ventilateur (41) est fixée par une grande surface sur l'arbre moteur (6).

7. Dispositif de refroidissement selon la revendication 6, caractérisé en ce que des canaux de guidage d'air, dans le ventilateur radial, sont tout d'abord orientés des ouvertures d'entrée (40) en direction de l'arbre moteur (6), puis sont consécutivement coudés en forme de "U", radialement vers l'extérieur, pour déboucher dans des ouvertures de sortie (42).

8. Dispositif de refroidissement selon la revendication 7, caractérisé en ce que la paroi de délimitation éloignée du moteur (3, 7), des parties (42) des canaux de guidage d'air conduisant vers l'extérieur, est formée par la bride de support (9) d'une pièce rotative entraînée par le moteur, par exemple une galette (13, 14) chauffée de manière inductive.

9. Dispositif de refroidissement selon la revendication 8, caractérisé en ce que les parties des canaux de guidage d'air dirigeant le courant d'air (L) radialement vers l'extérieur, sont formées entre la bride de support (9) et la roue de ventilateur (41) d'une part, et par un anneau de guidage (49) stationnaire d'autre part, qui forme, en commun avec la paroi frontale (1) du carter de moteur (3), côté sortie d'entraînement, les parties des canaux de guidage d'air, qui guident le courant d'air (L) vers l'intérieur.
